# FASCICULE DE BREVET EUROPEEN

(11) **EP 0 605 307 B1**
(45) Date de publication et mention de la délivrance du brevet: **14.05.1997**
(21) Numéro de dépôt: 93403171.7
(22) Date de dépôt: 24.12.1993
(51) Int. Cl.: F16M 1/00, H02K 7/14

(54) **Bride pour moteur électrique et son application au montage notamment d'une pompe**
Befestigungsflansch für einen elektrischen Motor und seine Verwendung zur Montage, insbesondere einer Pumpe
Mounting plate for an electric motor and its application to mounting a pump in particular

(30) Priorité: 29.12.1992 FR 9215856
(43) Date de publication de la demande: 06.07.1994
(73) Titulaire: ECIA - EQUIPEMENTS ET COMPOSANTS POUR L'INDUSTRIE AUTOMOBILE, F-25400 Audincourt (FR)
(72) Inventeur: Tourret, Alain, F-25200 Montbeliard (FR)
(74) Mandataire: Polus, Camille

(56) Documents cités:
- FR-A- 2 412 975
- US-A- 3 870 908
- US-A- 4 897 023
- US-A- 4 904 166

## Description

La présente invention concerne les moteurs électriques et, plus particulièrement, ceux d'entre eux qui sont destinés à entraîner un appareil qui est placé de manière contiguë au moteur dans l'axe de son arbre, et a tout spécialement pour objet une bride perfectionnée pour la réunion d'un moteur et d'un appareil.

Pour de nombreuses applications des moteurs électriques de relativement petites puissances, tels que ceux qui sont utilisés à bord des véhicules automobiles par exemple, sont conçus de manière à ce que l'appareil à entraîner, par exemple une pompe hydraulique est monté dans le prolongement du moteur et est appliqué étroitement contre le stator de ce dernier.

Un tel montage n'est pas sans poser des difficultés qui sont particulièrement délicates à résoudre.

En effet, un moteur électrique comprend habituellement notamment un stator avec un corps et au moins un flasque d'extrémité qui est porté par ce corps et qui est muni d'un palier, et un rotor avec un arbre monté sur ce palier. Le palier comprend, le plus souvent, un logement dans lequel est disposé un roulement qui reçoit l'arbre du rotor. Le roulement est généralement retenu dans son logement par sertissage ou par utilisation d'une plaque ou similaire supplémentaire rapportée et fixée.

La mise en place de l'appareil entraîné nécessite habituellement d'orienter tant radialement qu'angulairement l'appareil relativement au flasque contre lequel il est appliqué avant de l'y fixer.

On comprend que tout ceci augmente les coûts de fabrication et de montage et, de même, tend à accroître la dimension axiale, hors tout, du moteur équipé de son appareil.

US-A-4 904 166 décrit une bride pour moteur électrique comprenant notamment notamment un stator avec un corps et au moins un flasque d'extrémité qui est porté par le corps et qui est muni d'un palier et un rotor avec un arbre monté sur ce palier, bride qui est destinée à être portée par le flasque et à contribuer au montage d'un appareil à entraîner, et qui se présente à la manière d'une cuvette discoïde avec un fond pratiquement plan transpercé d'une ouverture centrale pour le passage de l'arbre, bride qui est équipée de moyens pour son centrage relativement au flasque et d'un dispositif d'orientation pour définir la position radiale et angulaire de l'appareil à entraîner.

Le but de l'invention est de remédier aux difficultés exposés plus haut à l'aide d'une bride perfectionnée.

A cet effet, l'invention a pour objet une bride du type précité décrit dans US-A-4 904 166, caractérisée en ce qu'une face du fond est destinée à être appliquée contre le flasque, en ce que la périphérie de l'ouverture centrale est destinée à maintenir le palier, et en ce qu'elle présente rebord périphérique de section en U ouvert du côté de la face du fond de la bride destinée à être appliquée contre le flasque, la branche extérieure du U étant destinée à définir la position radiale de l'appareil à entraîner en coopération avec un évidement complémentaire de celui-ci.

D'autres caractéristiques de l'invention apparaîtront à la lecture de la description et des revendications qui suivent, ainsi que de l'examen du dessin annexé, donné seulement à titre d'exemple où :
- les Figures 1A et 1B sont respectivement une vue en demi-élévation demi-coupe partielle et une vue en bout d'un moteur équipé d'une bride selon l'invention et associé à un appareil; et

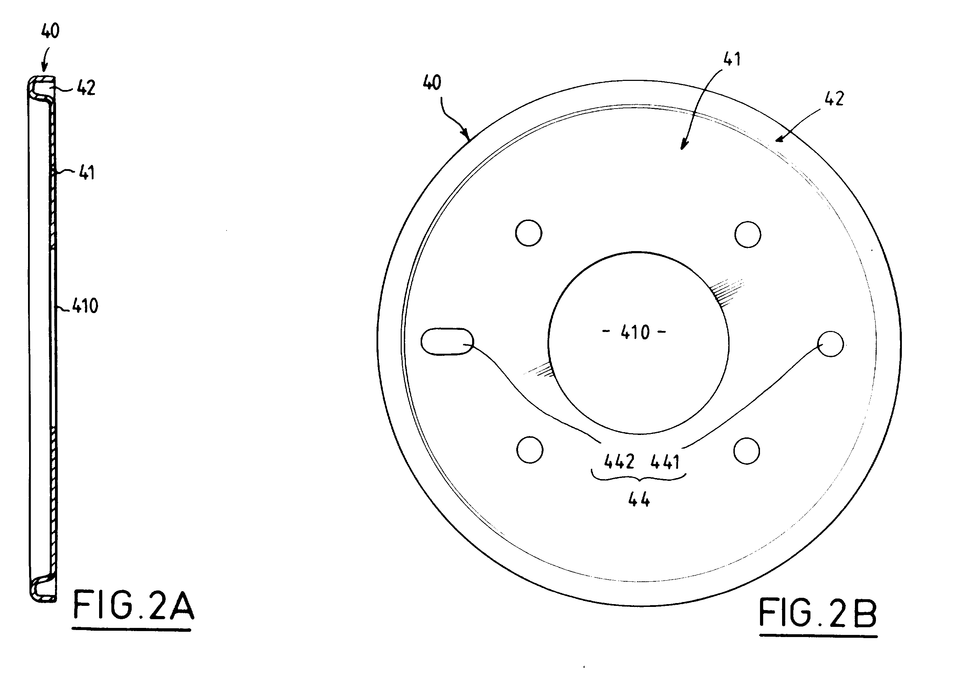

- les Figures 2A et 2B sont des vues en élévation en coupe et en plan d'un mode de réalisation d'une bride selon l'invention.

Les moteurs électriques et leur structure étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants de l'invention avant d'en exposer la fabrication au besoin, et la mise en oeuvre.

Comme on le voit, un moteur électrique comprend un stator 10, un rotor 20, un bornier 30 et une bride 40.

Ce moteur, par exemple à courant continu de tout type approprié, à commutation électronique ou à commutation électromécanique à l'aide d'un collecteur et de balais, possède un stator 10 fait d'un corps 11 et d'au moins un flasque 12 d'extrémité qui lui est assujetti de toutes manières appropriées classiques. Le corps 11 sert de carcasse pour le circuit magnétique et porte l'inducteur fait, par exemple, d'aimants permanents ou de bobinages. Le flasque 12 est muni d'un palier 120. Ce palier 120 est, par exemple, constitué d'un logement 121 qui est ménagé dans le flasque 12 et qui est équipé d'un roulement 122 à billes ou similaire qui y est logé de toutes manières appropriées.

Le rotor 20 comprend un arbre 21 auquel est associé au moins un induit, comme il est classique. L'arbre 21 est destiné à être porté par le palier 120, par exemple par engagement au travers du roulement 122.

Le bornier 30 est par exemple situé sur le corps 11 pour permettre le raccordement électrique notamment à une source d'énergie appropriée.

La bride 40 se présente essentiellement à la manière d'une cuvette discoïde avec un fond 41 et avec un rebord 42. Cette bride est aussi équipée de moyens 43 pour son centrage relativement au flasque 12 qui la porte et d'un dispositif 44 d'orientation pour définir la position radiale et angulaire de l'appareil à entraîner A, telle une pompe.

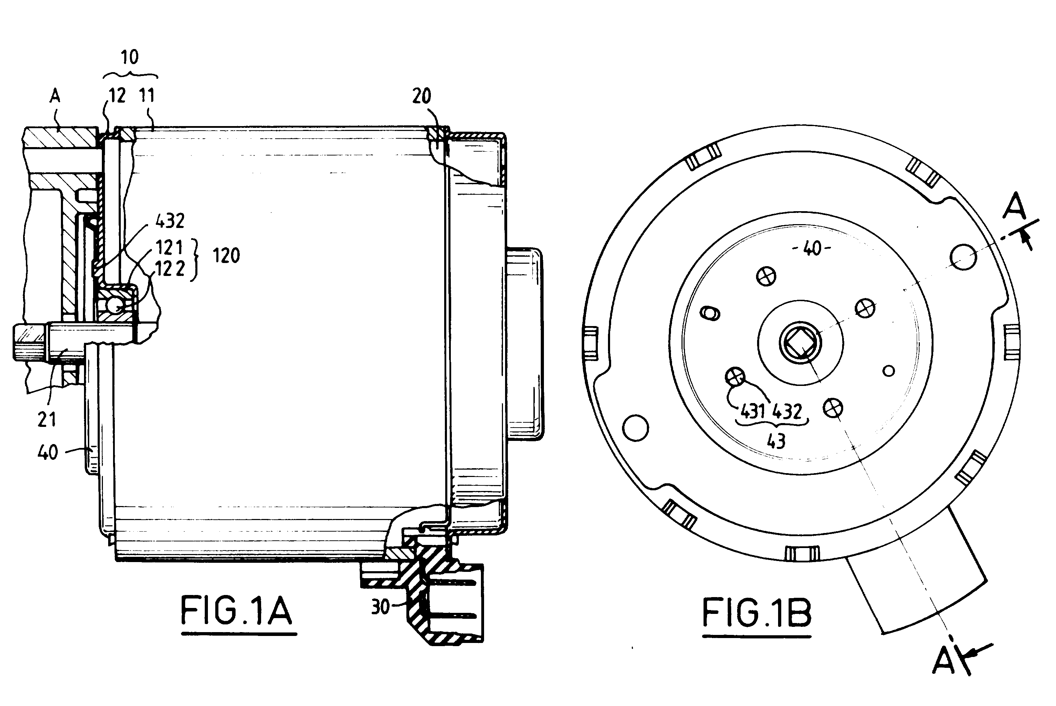

Comme on le voit, le fond 41 est relativement plan et est transpercé d'une ouverture 410 centrale pour le passage de l'arbre 21. La périphérie de cette ouverture 410 est destinée à maintenir le palier 120 et en particulier le roulement 122 dans le logement 121 lorsque la bride est montée sur le flasque, comme cela apparaît de l'examen de la Figure 1. Le rebord 42 de préférence circulaire se présente à la manière d'un U couché parallèlement à l'arbre 21 et est, de préférence, ouvert en direction du flasque 12, comme illustré. Ce rebord 42 en U peut présenter des branches parallèles ou non. La branche extérieure de ce U peut être perpendiculaire au fond 41 ou inclinée relativement à celui-ci de manière à former une portée cylindrique ou conique dans un sens ou dans l'autre. De préférence la tranche libre de la branche extérieure du U est un peu en retrait par rapport à la face du fond située du même côté; ce retrait est de l'ordre de quelques dizièmes de millimètres par exemple.

Les moyens de centrage 43 comprennent des éléments mâles et femelles, destinés à coopérer qui sont placés pour partie sur le fond 41 et pour partie sur le flasque 12. Comme on le voit, ces éléments se présentent par exemple à la manière de trous 431 et de tétons 432 qui sont les uns ménagés dans le fond 41 de la bride 40 et les autres qui sont portés par le flasque 12. Ces éléments, sont de préférence répartis régulièrement angulairement.

Le dispositif d'orientation 44 comprend de préférence un orifice 441 circulaire et une fente 442 oblongue, qui sont situés sur un même diamètre et de part et d'autre de l'ouverture 410, comme illustré.

La bride selon l'invention est par exemple confectionnée dans une tôle métallique par exemple d'épaisseur 0,6 mm de nuance XC 75 qui après découpe et mise en forme par toutes techniques appropriées classiques traditionnelles est de préférence trempée. Le flasque est, par exemple, fait par moulage ou emboutissage d'un matériau approprié magnétique ou amagnétique.

La bride, une fois appliquée contre le flasque, y est maintenue à l'aide des tétons dont les bouts libres sont par exemple écrasés ou sertis à la manière de tête de rivet pour immobiliser la bride contre le flasque.

Lorsque maintenant on rapproche l'appareil à entraîner et que l'on met en prise l'embout de l'arbre du moteur avec la partie complémentaire de cet appareil par exemple la turbine d'une pompe, l'appareil est centré par la branche extérieure du rebord en U qui définit la position radiale en coopération avec un évidement complémentaire de l'appareil; la position angulaire est définie par l'orifice et/ou la fente. La flexibilité du rebord en U qui présente une certaine élasticité assure la compensation ou le rattrapage des jeux éventuels résultant, par exemple, des tolérances de fabrication.

Ce qui précède met bien en lumière les particularités, l'intérêt et les avantages d'une bride selon l'invention.

## Revendications

1. Bride (40) pour moteur électrique comprenant notamment notamment un stator (10) avec un corps (11) et au moins un flasque (12) d'extrémité qui est porté par le corps (11) et qui est muni d'un palier (120) et un rotor (20) avec un arbre (21) monté sur ce palier (120), bride (40) qui est destinée à être portée par le flasque (12) et à contribuer au montage d'un appareil à entraîner, et qui se présente à la manière d'une cuvette discoïde avec un fond (41) pratiquement plan transpercé d'une ouverture (410) centrale pour le passage de l'arbre (21), bride (40) qui est équipée de moyens (43) pour son centrage relativement au flasque (12) et d'un dispositif (44) d'orientation pour définir la position radiale et angulaire de l'appareil à entraîner, bride (40) qui est caractérisée en ce qu'une face du fond (41) est destinée à être appliquée contre le flasque (12), en ce que la périphérie de l'ouverture centrale (410) est destinée à maintenir le palier (120), et en ce qu'elle (40) présente un rebord (42) périphérique de section en U ouvert du côté de la face du fond (41) de la bride (40) destinée à être appliquée contre le flasque (12), la branche extérieure du U étant destinée à définir la position radiale de l'appareil à entraîner en coopération avec un évidement complémentaire de celui-ci.

2. Bride selon la revendication 1, caractérisée en ce que les moyens de centrage (43) comprennent des éléments (431, 432) mâles et femelles destinés à coopérer qui sont placés pour partie sur le fond (41) et pour partie sur le flasque (12).

3. Bride selon la revendication 2, caractérisée en ce que les éléments (431, 432) sont répartis régulièrement angulairement.

4. Bride selon la revendication 2 ou 3, caractérisée en ce que les éléments (431, 432) sont des trous (431) et des tétons (432).

5. Bride selon l'une quelconque des revendications 2 à 4, caractérisée en ce que les trous (431) sont ménagés dans le fond (41) de la bride (40) et les tétons (432) sont portés par le flasque (12).

6. Bride selon l'une quelconque des revendications 1 à 5, caractérisée en ce que le dispositif d'orientation (44) comprend un orifice (441) circulaire et une fente (442) oblongue situés sur un même diamètre et de part et d'autre de l'ouverture (410).

7. Application d'une bride selon l'une quelconque des revendications 1 à 6 au montage d'une pompe (A) sur un moteur électrique.

## Patentansprüche

1. Befestigungsflansch (40) für einen elektrischen Motor mit insbesondere einem Stator (10) mit einem Körper (11) und mindestens einer Endlagerscheibe (12), die vom Körper (11) gehaltert ist und die mit einem Lager (120) versehen ist, und mit einem Rotor (20), mit einer Welle (21), die auf dem Lager (120) angebracht ist, wobei der Befestigungsflansch (40) durch die Endlagerscheibe (12) gehaltert ist und zur Anbringung einer Antriebseinrichtung beiträgt und wobei der Befestigungsflansch nach Art einer diskusförmigen Büchse mit einem praktisch ebenen Boden (41), der von einer zentralen Öffnung (410) zur Durchführung der Welle (21) durchsetzt ist, gestaltet ist, wobei der Befestigungsflansch (40) mit einer Einrichtung (43) zu seiner Zentrierung in Bezug auf die Endlagerscheibe (12) und mit einer Orientierungseinrichtung (44) zum Definieren der radialen und winkelmäßigen Position der Antriebseinrichtung versehen ist, wobei der Befestigungsflansch (40) dadurch gekennzeichnet ist, daß eine Fläche des Bodens (41) gegen die Endlagerscheibe (12) anlegbar ist, daß die Peripherie der zentralen Öffnung (410) zum Haltern des Lagers (120) dient, und daß er (40) einen peripherischen umgebogenen Rand (42) mit einem U-Querschnitt aufweist, der angrenzend an die Fläche des Bodens (41) des Befestigungsflanschs (40) offen ist, die zur Anlage gegen die Endlagerscheibe (12) vorgesehen ist, wobei der äußere Zweig des U zum Definieren der radialen Position der Antriebseinrichtung in Zusammenwirken mit einer komplementären Aussparung derselben dient.

2. Befestigungsflansch nach Anspruch 1, dadurch gekennzeichnet, daß die Zentrierungseinrichtung (43) zusammenwirkende männliche und weibliche Elemente (431, 432) aufweist, welche zum Teil auf dem Boden (41) und zum Teil auf der Endlagerscheibe (12) angeordnet sind.

3. Befestigungsflansch nach Anspruch 2, dadurch gekennzeichnet, daß die Elemente (431, 432) winkelmäßig gleichmäßig beabstandet sind.

4. Befestigungsflansch nach Anspruch 2 oder 3, dadurch gekennzeichnet, daß die Elemente (431, 432) Löcher (431) und Zapfen (432) sind.

5. Befestigungsflansch nach einem der Ansprüche 2 bis 4, dadurch gekennzeichnet, daß die Löcher (431) auf dem Boden (41) des Befestigungsflanschs (40) angeordnet sind und daß die Zapfen (432) von der Endlagerscheibe (12) getragen sind.

6. Befestigungsflansch nach einem der Ansprüche 1 bis 5, dadurch gekennzeichnet, daß die Orientierungseinrichtung (44) ein kreisförmiges Loch (441) und ein längliches Schlitzloch (442) aufweist, welche auf dem gleichen Durchmesser und beiderseits der Öffnung (410) angeordnet sind.

7. Verwendung eines Befestigungsflanschs gemäß einem der Ansprüche 1 bis 6 zur Montage einer Pumpe (A) auf einem elektrischen Motor.

## Claims

1. Mounting plate (40) for an electric motor comprising especially a stator (10) with a body (11) and at least one end plate (12) which is borne by the body (11) and which is fitted with a bearing (120), and a rotor (20) with a shaft (21) mounted on this bearing (120); which mounting plate (40) is intended to be borne by the end plate (12) and to play a part in mounting an item of equipment to be driven, and which is in the form of a discoid bowl with a practically flat bottom (41) with a central aperture (410) pierced right through it for the passage of the shaft (21); which mounting plate (40) is equipped with means (43) for centring it relative to the end plate (12) and with an orientation device (44) for defining the radial and angular position of the item of equipment to be driven; which mounting plate (40) is characterized in that one face of the bottom (41) is intended to be pressed against the end plate (12), in that the periphery of the central aperture (410) is intended to hold the bearing (120), and in that it (40) has a peripheral rim (42) of U-shaped cross section with the open side on the same side as that face of the bottom (41) of the mounting plate (40) which is intended to be pressed against the end plate (12), the outer branch of the U being intended to define the radial position of the item of equipment to be driven, in conjunction with a complementary recess therein.

2. Mounting plate according to Claim 1, characterized in that the centring means (43) comprise male and female elements (431, 432) intended to interact, and some of which are placed on the bottom (41) and others of which are placed on the end plate (12).

3. Mounting plate according to Claim 2, characterised in that the elements (431, 432) are uniformly angularly distributed.

4. Mounting plate according to Claim 2 or 3, characterized in that the elements (431, 432) are holes (431) and studs (432).

5. Mounting plate according to any one of Claims 2 to 4, characterized in that the holes (431) are made in the bottom (41) of the mounting plate (40) and the studs (432) are borne by the end plate (12).

6. Mounting plate according to any one of Claims 1 to 5, characterized in that the orientation device (44) comprises a circular orifice (441) and an oblong slot (442) which are situated on one and the same diameter and on each side of the aperture (410).

7. Application of a mounting plate according to any one of Claims 1 to 6, for mounting a pump (A) on an electric motor.
